# EUROPEAN PATENT APPLICATION

(11) **EP 4 819 663 A1**
(43) Date of publication of application: **07.10.2026**
(21) Application number: 23960169.3
(22) Date of filing: 29.11.2023
(51) Int. Cl.: H04W 16/26, H04W 48/16, H04W 88/08

(54) **BASE STATION AND COMMUNICATION METHOD**

(71) Applicant: NTT DOCOMO, INC., Tokyo 100-6150 (JP); NTT, Inc., Tokyo 100-8116 (JP)
(72) Inventor: GOTO, Kenta, Tokyo 100-6150 (JP); SUYAMA, Satoshi, Tokyo 100-6150 (JP); MURAYAMA, Daisuke, Musashino-shi, Tokyo 180-8585 (JP); IWABUCHI, Masashi, Musashino-shi, Tokyo 180-8585 (JP); YAMADA, Takayuki, Musashino-shi, Tokyo 180-8585 (JP)
(74) Representative: Hoffmann Eitle
(86) International application number: PCT/JP2023/042825
(87) International publication number: WO 2025/115151

(57) **Abstract**

A base station includes an acquisition unit configured to acquire position information of a terminal and position information of a plurality of wireless relay apparatuses, respectively, a control unit configured to select, based on the position information, a wireless relay apparatus to be controlled from among the plurality of wireless relay apparatuses, and a transmission unit configured to transmit a radio wave to the selected wireless relay apparatus.

## Description

### FIELD OF INVENTION

The present invention relates to a base station and a communication method in a wireless communication system.

### BACKGROUND ART

In the 3rd Generation Partnership Project (3GPP), studies are underway on a wireless communication scheme called 5G or New Radio (hereinafter, the wireless communication scheme is referred to as "NR") in order to realize further increases in system capacity, higher data transmission rates, and lower latency in radio sections. In 5G, various radio technologies and network architectures are being studied in order to satisfy requirements such as achieving a throughput of 10 Gbps or more while reducing latency in the radio section to 1 ms or less (e.g., Non-Patent Literature 1).

In next-generation communications, the use of high-frequency bands is expected. From viewpoints such as a reduction in the number of scatterers, a decrease in shadowing effects, and an increase in distance attenuation due to characteristics of such high-frequency bands, improvement in communication quality is required. It is expected that beam control and environmental arrangements for ensuring communication quality will be necessary.

For example, in high-frequency bands, there is a problem in that dead zones are likely to occur due to strong rectilinear propagation characteristics of radio waves. Therefore, methods for improving communication quality in multipath environments are being attempted by using a passive repeater, an active reflector (RIS: Reconfigurable Intelligent Surface), or a smart repeater that receives, amplifies, and re-radiates signals (e.g., Non-Patent Literature 2).

### CITATION LIST

### Non-Patent Literature

Non-Patent Literature 1: 3GPP TS 38.300 V17.6.0 (2023-09)
Non-Patent Literature 2: NTT DOCOMO, "White Paper: 5G Evolution and 6G," (2021-02, Version 3.0). Internet <URL: https://www.nttdocomo.co.jp/binary/pdf/corporate/technology/whitepaper_6g/ DOCOMO_6G_White_PaperJP_20210203.pdf>

### SUMMARY OF INVENTION

### TECHNICAL PROBLEM

When operating a wireless relay apparatus such as a reflector or a smart repeater that relays radio waves by reflecting or transmitting radio waves from a radio-wave source such as a base station to a radio-wave receiving destination such as a terminal, it has been difficult to improve capacity by increasing the number of spatial multiplexing streams in an environment in which reflected waves are few.

The present invention has been made in view of the above circumstances, and an object of the present invention is to improve communication quality in a wireless communication system by using a wireless relay apparatus.

### SOLUTION TO PROBLEM

According to the disclosed technology, a base station is provided. The base station includes:
an acquisition unit configured to acquire position information of a terminal and position information of a plurality of wireless relay apparatuses, respectively;
a control unit configured to select, based on the position information, a wireless relay apparatus to be controlled from among the plurality of wireless relay apparatuses; and
a transmission unit configured to transmit a radio wave to the selected wireless relay apparatus.

### ADVANTAGEOUS EFFECTS OF INVENTION

According to the disclosed technology, communication quality can be improved in a wireless communication system by using a wireless relay apparatus.

### BRIEF DESCRIPTION OF DRAWINGS

[FIG. 1] FIG. 1 is a diagram illustrating a wireless communication system according to an embodiment of the present invention.
[FIG. 2] FIG. 2 is a diagram illustrating an example of a functional configuration of a base station 10 according to an embodiment of the present invention.
[FIG. 3] FIG. 3 is a diagram illustrating an example of a functional configuration of a terminal 20 according to an embodiment of the present invention.
[FIG. 4] FIG. 4 is a diagram illustrating an example of a functional configuration of a wireless relay apparatus 30 according to an embodiment of the present invention.
[FIG. 5] FIG. 5 is a diagram illustrating an example of an operation of the wireless relay apparatus 30 according to an embodiment of the present invention.
[FIG. 6] FIG. 6 is a diagram illustrating an example of communication in a high-frequency band.
[FIG. 7] FIG. 7 is a diagram illustrating an example of a reflective-type wireless relay apparatus 30 according to an embodiment of the present invention.
[FIG. 8] FIG. 8 is a diagram illustrating an example of a transmissive-type wireless relay apparatus 30 according to an embodiment of the present invention.
[FIG. 9] FIG. 9 is a diagram illustrating an example of communication (1) according to an embodiment of the present invention.
[FIG. 10] FIG. 10 is a diagram illustrating an example of communication (2) according to an embodiment of the present invention.
[FIG. 11] FIG. 11 is a diagram illustrating an example of a communication environment according to an embodiment of the present invention.
[FIG. 12] FIG. 12 is a diagram illustrating an example (1) in which a Reconfigurable Intelligent Surface (RIS) is installed according to an embodiment of the present invention.
[FIG. 13] FIG. 13 is a diagram illustrating an example (2) in which an RIS is installed on a moving object according to an embodiment of the present invention.
[FIG. 14] FIG. 14 is a diagram illustrating an example (3) in which an RIS is installed on mobility according to an embodiment of the present invention.
[FIG. 15] FIG. 15 is a diagram illustrating an example (4) in which an RIS is installed on mobility according to an embodiment of the present invention.
[FIG. 16] FIG. 16 is a diagram illustrating an example (5) in which an RIS is installed on mobility according to an embodiment of the present invention.
[FIG. 17] FIG. 17 is a diagram illustrating an example (6) in which an RIS is installed on mobility according to an embodiment of the present invention.
[FIG. 18] FIG. 18 is a diagram illustrating an example (1) in which an RIS is installed on a stationary object according to an embodiment of the present invention.
[FIG. 19] FIG. 19 is a flowchart for explaining an example of controlling an RIS according to an embodiment of the present invention.
[FIG. 20] FIG. 20 is a diagram illustrating an example of a hardware configuration of the base station 10, the terminal 20, or the wireless relay apparatus 30 according to an embodiment of the present invention.
[FIG. 21] FIG. 21 is a diagram illustrating an example of a configuration of a vehicle 2001 according to an embodiment of the present invention.

### DESCRIPTION OF EMBODIMENTS

Hereinafter, embodiments of the present invention will be described with reference to the drawings. The embodiments described below are merely examples, and the embodiments to which the present invention is applied are not limited to the following embodiments.

In the operation of the wireless communication system according to the embodiments of the present invention, existing technologies may be used as appropriate. However, such existing technologies include, for example, existing Long Term Evolution (LTE), but are not limited to existing LTE. Further, the term "LTE" used in the present specification has a broad meaning that includes LTE-Advanced, as well as communication schemes subsequent to LTE-Advanced (e.g., New Radio), unless otherwise specified.

Further, in the embodiments of the present invention described below, terms such as SS (Synchronization Signal), PSS (Primary SS), SSS (Secondary SS), PBCH (Physical Broadcast Channel), PRACH (Physical Random Access Channel), PDCCH (Physical Downlink Control Channel), PDSCH (Physical Downlink Shared Channel), PUCCH (Physical Uplink Control Channel), and PUSCH (Physical Uplink Shared Channel), which are used in existing LTE, are employed. This is for convenience of description, and signals, functions, and the like similar to these may be referred to by other names. Further, the above-described terms in NR correspond to NR-SS, NR-PSS, NR-SSS, NR-PBCH, NR-PRACH, and the like. However, even when signals used in NR are referred to, the prefix "NR-" is not necessarily explicitly indicated.

In the embodiments of the present invention, the duplex scheme may be a Time Division Duplex (TDD) scheme, a Frequency Division Duplex (FDD) scheme, or another scheme (e.g., Flexible Duplex or the like).

Further, in the embodiments of the present invention, the expression that a radio parameter or the like is "configured" may mean that a predetermined value is configured in advance (pre-configured), or that a radio parameter notified from the base station 10 or the terminal 20 is configured.

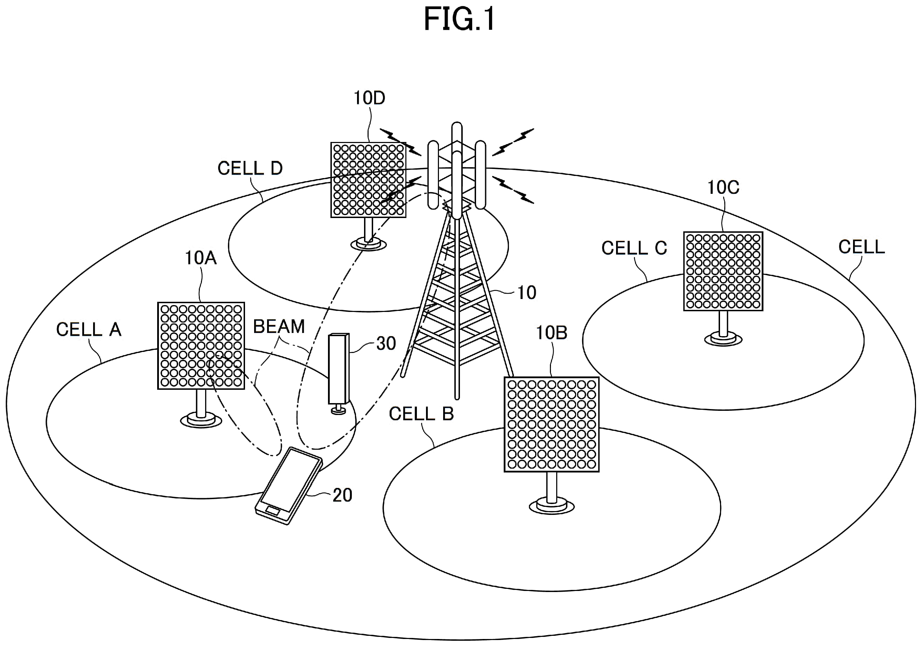

FIG. 1 is a diagram illustrating a wireless communication system according to an embodiment of the present invention. As illustrated in FIG. 1, the wireless communication system according to the embodiment of the present invention includes a base station 10 and a terminal 20. A plurality of base stations 10 and a plurality of terminals 20 may be provided.

The base station 10 is a communication apparatus that provides one or more cells and performs wireless communication with the terminal 20. Physical resources of radio signals are defined in a time domain and a frequency domain. The time domain may be defined by the number of Orthogonal Frequency Division Multiplexing (OFDM) symbols, and the frequency domain may be defined by the number of subcarriers or the number of resource blocks. Further, a Transmission Time Interval (TTI) in the time domain may be a slot or a sub-slot, or the TTI may be a subframe.

The base station 10 is capable of performing Carrier Aggregation to communicate with the terminal 20 by bundling a plurality of cells (a plurality of component carriers (CCs)). In carrier aggregation, one primary cell (PCell) and one or more secondary cells (SCells) are used.

The base station 10 transmits synchronization signals and system information to the terminal 20. The synchronization signals include, for example, NR-PSS and NR-SSS. The system information is transmitted, for example, on NR-PBCH or PDSCH and is also referred to as broadcast information. As illustrated in FIG. 1, the base station 10 transmits control signals or data to the terminal 20 in Downlink (DL), and receives control signals or data from the terminal 20 in Uplink (UL). Here, signals transmitted on control channels such as PUCCH and PDCCH are referred to as control signals, and signals transmitted on shared channels such as PUSCH and PDSCH are referred to as data, although this terminology is merely an example.

The terminal 20 is a communication apparatus having a wireless communication function, such as a smartphone, a mobile phone, a tablet, a wearable terminal, or a communication module for Machine-to-Machine communication (M2M). As illustrated in FIG. 1, the terminal 20 receives control signals or data from the base station 10 in DL and transmits control signals or data to the base station 10 in UL, thereby utilizing various communication services provided by the wireless communication system. The terminal 20 may also be referred to as a UE, and the base station 10 may also be referred to as a gNB.

The terminal 20 is capable of performing carrier aggregation to communicate with the base station 10 by bundling a plurality of cells (a plurality of CCs). In carrier aggregation, one primary cell and one or more secondary cells are used. In addition, a PUCCH-SCell having a PUCCH may also be used.

In the wireless communication system according to the embodiment of the present invention, the base station 10 is, for example, a radio base station operated in 5G or 6G, and forms a cell. The cell may be a relatively large cell and may be referred to as a macro cell.

Base stations 10A to 10D are base stations operated in 5G or 6G. Each of the base stations 10A to 10D forms a cell CA to cell D having a smaller size than the macro cell. Cells A to D may also be referred to as small cells or macro cells. As illustrated in FIG. 1, cells A to D may be formed so as to be included within the macro cell.

A macro cell may generally be interpreted as a communicable area covered by one base station and having a radius ranging from several hundred meters to several tens of kilometers. A small cell may be interpreted as a generic term for cells having relatively low transmission power and covering a smaller area than a macro cell.

The base station 10 and the base stations 10A to 10D may also be referred to as gNB (gNodeB) or a BS (Base Station). The terminal 20 may also be referred to as a UE or an MS. Furthermore, the specific configuration of the wireless communication system, including the number and types of base stations and terminals, is not limited to the example illustrated in FIG. 1.

Further, the wireless communication system is not necessarily limited to a wireless communication system conforming to 5G or 6G. For example, the wireless communication system may be a next-generation wireless communication system following 6G, or a wireless communication system conforming to Long Term Evolution (LTE).

The base station 10 and the base stations 10A to 10D perform, for example, wireless communication with the terminal 20 in accordance with 5G or 6G. The base station 10, the base stations 10A to 10D, and the terminal 20 may support Massive Multiple-Input Multiple-Output (Massive MIMO), which generates highly directional beams by controlling radio signals transmitted from a plurality of antenna elements; Carrier Aggregation (CA), which bundles a plurality of component carriers (CCs); Dual Connectivity (DC), in which the terminal 20 simultaneously communicates with two NG-RAN nodes; and Integrated Access and Backhaul (IAB), in which a wireless backhaul between wireless communication nodes such as a gNB and wireless access to the terminal 20 are integrated.

The wireless communication system may also support frequency bands higher than the following 3GPP Release 15 frequency ranges (Frequency Range, FR). For example, FR1 may correspond to 410 MHz to 7.125 GHz, and FR2 may correspond to 24.25 GHz to 52.6 GHz. Furthermore, the wireless communication system may support a frequency band exceeding 52.6 GHz and up to 114.25 GHz. Such a frequency band may be referred to as a millimeter-wave band.

A base station 10 that supports Massive MIMO can transmit beams. Massive MIMO generally refers to MIMO communication using an antenna having 100 or more antenna elements, and enables higher-speed wireless communication than conventional systems through multiplexing effects of multiple streams. Advanced beamforming is also possible. The beam width may be dynamically changed depending on the frequency band used or the state of the terminal 20. In addition, the received signal power can be increased by beamforming gain obtained by using narrow beams. Furthermore, effects such as reduction of interference and efficient utilization of radio resources can be expected.

The wireless communication system may further include a wireless relay apparatus 30. In an embodiment of the present invention, the wireless relay apparatus 30 may be, for example, a reflector (Reconfigurable Intelligent Surface, RIS), a phase-controlled reflector, a passive repeater, an Intelligent Reflecting Surface (IRS), or the like. Specific examples of the reflector (RIS) include a metamaterial reflector, a dynamic metasurface, and a metasurface lens (e.g., Non-Patent Literature 2).

In the embodiment of the present invention, the wireless relay apparatus 30 relays, for example, a radio signal transmitted from the base station 10A. In the description of the embodiment of the present invention, the term "relay" may refer to at least one of "reflection," "transmission," "collection (collecting radio waves substantially at one point)," and "diffraction." The terminal 20 can receive the radio signal relayed by the wireless relay apparatus 30. Furthermore, the wireless relay apparatus 30 may relay a radio signal transmitted from the terminal 20, or may relay a radio signal transmitted from the base station 10.

As an example, the wireless relay apparatus 30 can change the phase of a radio signal to be relayed toward the terminal 20. From this viewpoint, the wireless relay apparatus 30 may also be referred to as a phase-variable reflector. In the present embodiment, the wireless relay apparatus 30 may be assumed to have a function of relaying radio signals while changing the phase of the radio signals, but the present invention is not limited thereto. The wireless relay apparatus 30 may also be referred to as a repeater, relay apparatus, reflectarray, Intelligent Reflecting Surface (IRS), or transmitarray.

Further, in the embodiment of the present invention, the wireless relay apparatus 30 such as a Reconfigurable Intelligent Surface (RIS) may also be referred to as a battery-less device, a metamaterial functional apparatus, an intelligent reflecting surface, or a smart repeater. As an example, the wireless relay apparatus 30 such as an RIS or a smart repeater may be defined as having the functions shown in 1) to 5) below.

1) The wireless relay apparatus 30 may have a function of receiving a signal transmitted from the base station 10. The signal may be a DL signal such as an SSB (SS/PBCH block), PDCCH, PDSCH, DM-RS (Demodulation Reference Signal), PT-RS (Phase Tracking Reference Signal), CSI-RS (Channel Status Information Reference Signal), or a signal dedicated to the RIS. The wireless relay apparatus 30 may also have a function of receiving a signal carrying information relating to a metamaterial function. The wireless relay apparatus 30 may further have a transmission function for transmitting the signal to the terminal 20. The SSB may be a signal including a synchronization signal and broadcast information.
2) The wireless relay apparatus 30 may have a function of transmitting a signal to the base station 10. The signal may be a UL signal such as PRACH, PUCCH, PUSCH, DM-RS, PT-RS, SRS (Sounding Reference Signal), or a signal dedicated to the RIS. The wireless relay apparatus 30 may also have a function of transmitting information relating to a metamaterial function. The wireless relay apparatus 30 may further have a function of receiving the signal from the terminal 20.
3) The wireless relay apparatus 30 may have a frame synchronization function with the base station 10. The wireless relay apparatus 30 may also have a frame synchronization function with the terminal 20.
4) The wireless relay apparatus 30 may have a function of reflecting a signal transmitted from the base station 10 or the terminal 20. For example, the reflection function may include a function relating to phase change and a function relating to beam control (e.g., a function relating to control of a Transmission Configuration Indication (TCI) state and Quasi Co-Location (QCL), selection and application of a beam, and selection and application of a spatial filter or precoding weight).
5) The wireless relay apparatus 30 may have a function of changing the power of a signal transmitted from the base station 10 or the terminal 20. For example, the power change function may include power amplification.

Further, in the wireless relay apparatus 30 such as an RIS or a smart repeater, "receive and transmit" or "relay" may mean that the following function A is performed but transmission is carried out without performing the following function B.
Function A: Applying a phase shifter.
Function B: Not passing through a compensation circuit (e.g., amplification or filtering).

As another example:
Function A: Applying a phase shifter and a compensation circuit.
Function B: Not passing through frequency conversion.

In the wireless relay apparatus 30 such as an Reconfigurable Intelligent Surface (RIS), when the phase is changed, the amplitude may also be amplified. Further, in the wireless relay apparatus 30 such as an RIS, the term "relay" may mean transmitting a received signal as it is without performing Layer-2 or Layer-3 processing, transmitting the received signal as it is at the physical layer level, or transmitting the received signal without interpreting the signal (in such a case, operations such as phase change or amplitude amplification may be performed).

### (Apparatus Configuration)

Next, examples of functional configurations of the base station 10, the terminal 20, and the wireless relay apparatus 30 that execute the processing and operations according to the embodiment of the present invention will be described. The base station 10, the terminal 20, and the wireless relay apparatus 30 include functions for executing embodiments described later. However, each of the base station 10, the terminal 20, and the wireless relay apparatus 30 may include only some of the functions of the embodiments.

### <Base Station 10>

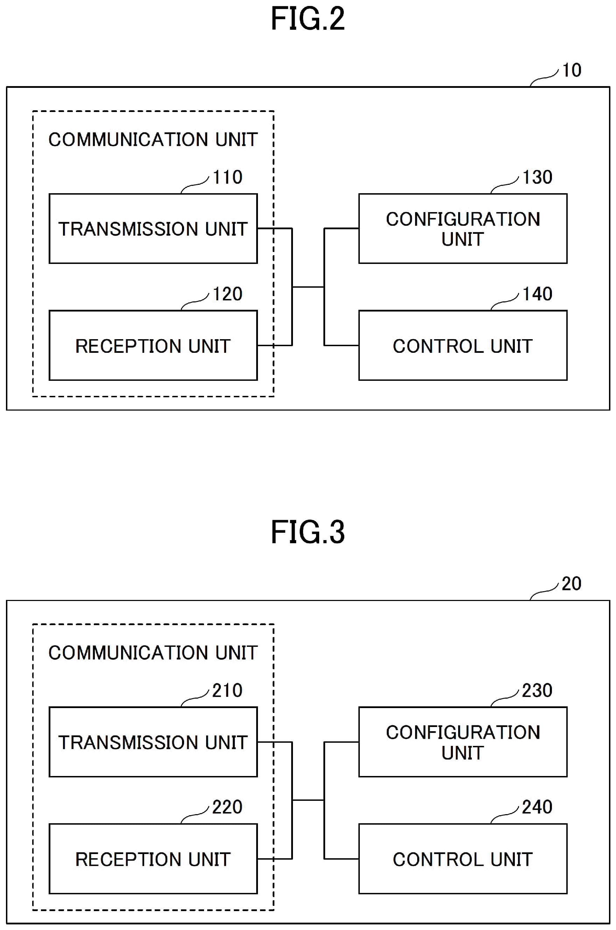

FIG. 2 is a diagram illustrating an example of a functional configuration of the base station 10. As illustrated in FIG. 2, the base station 10 includes a transmission unit 110, a reception unit 120, a configuration unit 130, and a control unit 140. The functional configuration illustrated in FIG. 2 is merely an example. As long as the operations according to the embodiment of the present invention can be executed, the functional division and the names of the functional units may be arbitrary. The transmission unit 110 and the reception unit 120 may collectively be referred to as a communication unit.

The transmission unit 110 includes a function of generating a signal to be transmitted to the terminal 20 and transmitting the signal wirelessly. The reception unit 120 includes a function of receiving various signals transmitted from the terminal 20 and obtaining, for example, information of higher layers from the received signals. The transmission unit 110 also has a function of transmitting NR-PSS, NR-SSS, NR-PBCH, DL/UL control signals, DL data, and the like to the terminal 20. The transmission unit 110 further transmits configuration information and the like described in the embodiments.

The configuration unit 130 stores, in a storage, configuration information that is set in advance and various types of configuration information to be transmitted to the terminal 20, and reads the information from the storage as necessary. The control unit 140 performs, for example, resource allocation and overall control of the base station 10. The functional portion relating to signal transmission in the control unit 140 may be included in the transmission unit 110, and the functional portion relating to signal reception in the control unit 140 may be included in the reception unit 120. The transmission unit 110 and the reception unit 120 may also be referred to as a transmitter and a receiver, respectively.

### <Terminal 20>

FIG. 3 is a diagram illustrating an example of a functional configuration of the terminal 20. As illustrated in FIG. 3, the terminal 20 includes a transmission unit 210, a reception unit 220, a configuration unit 230, and a control unit 240. The functional configuration illustrated in FIG. 3 is merely an example. As long as the operations according to the embodiment of the present invention can be executed, the functional division and the names of the functional units may be arbitrary. The transmission unit 210 and the reception unit 220 may collectively be referred to as a communication unit.

The transmission unit 210 generates a transmission signal from transmission data and transmits the transmission signal wirelessly. The reception unit 220 wirelessly receives various signals and obtains higher-layer signals from received physical-layer signals. The transmission unit 210 also transmits Hybrid Automatic Repeat Request (HARQ)-ACK, and the reception unit 220 receives configuration information and the like described in the embodiments.

The configuration unit 230 stores various types of configuration information received from the base station 10 by the reception unit 220 in a storage and reads the information from the storage as necessary. The configuration unit 230 also stores configuration information set in advance. The control unit 240 performs overall control of the terminal 20. The functional portion relating to signal transmission in the control unit 240 may be included in the transmission unit 210, and the functional portion relating to signal reception in the control unit 240 may be included in the reception unit 220. The transmission unit 210 and the reception unit 220 may also be referred to as a transmitter and a receiver, respectively.

### <Wireless Relay Apparatus 30>

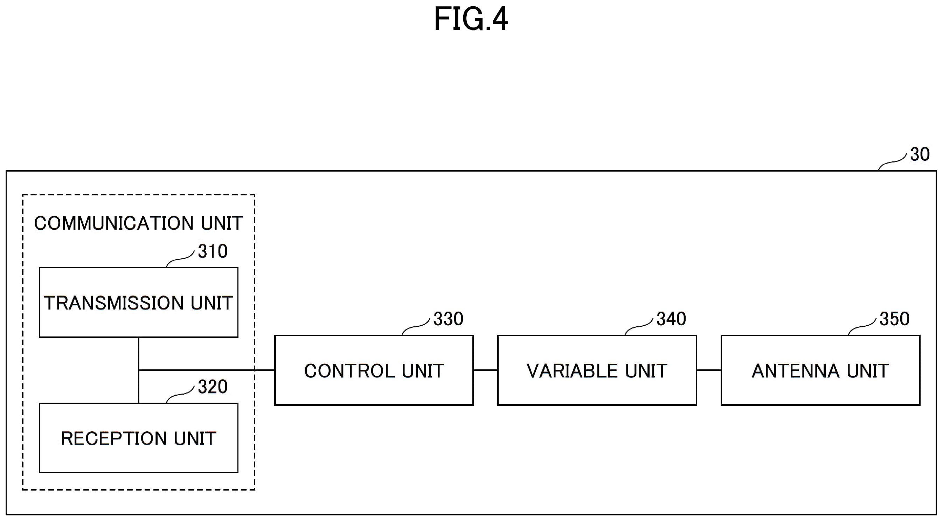

FIG. 4 is a diagram illustrating an example of a functional configuration of the wireless relay apparatus 30 according to the embodiment of the present invention. As illustrated in FIG. 4, the wireless relay apparatus 30 includes a transmission unit 310, a reception unit 320, a control unit 330, a variable unit 340, and an antenna unit 350. As long as the operations according to the embodiment of the present invention can be executed, the functional division and the names of the functional units may be arbitrary. The transmission unit 310 and the reception unit 320 may collectively be referred to as a communication unit.

The antenna unit 350 includes at least one antenna connected to the variable unit 340. For example, the antenna unit 350 may be arranged as an array antenna. In the embodiment of the present invention, the antenna unit 350 may be particularly referred to as a relay antenna. The variable unit 340 and the antenna unit 350 may collectively be referred to as a relay unit.

The variable unit 340 is connected to the antenna unit 350 and can change parameters such as phase, load, and amplitude. For example, the variable unit 340 may be a variable phase shifter, a phase shifter, an amplifier, or the like. For example, by changing the phase of radio waves arriving at the relay antenna from a radio-wave source, the direction of the radio waves or the beam can be changed.

The control unit 330 is a control means for controlling the variable unit 340. In the embodiment of the present invention, the control unit 330 functions as a control unit that controls a relay state when relaying radio waves from the base station 10 or the terminal 20 without interpreting the signals. Here, the control unit 330 may change the relay state based on control information received from the base station 10 or the terminal 20 via the communication unit, or may change the relay state based on a reception state of radio waves from the base station 10 or the terminal 20. For example, the control unit 330 may select an appropriate reception beam and transmission beam (direction thereof) based on control information such as an SSB and may control the variable unit 340. Similarly, the control unit 330 may select an appropriate combination of a reception direction and a transmission direction based on criteria such as the highest reception quality or reception power derived from the reception state, and may control the variable unit 340.

Further, in the embodiment of the present invention, the control unit 330 may control the variable unit 340 based on information relating to a propagation path between the terminal 20 or the base station 10A and the antenna unit 350 (including information estimated from the reception state and control information; the same applies hereinafter). For example, the control unit 330 may relay radio waves received from the base station 10A toward a specific direction such as a radio-wave receiving destination (in this case, the terminal 20) by changing the phase without using transmission power, using a known technique such as an active repeater or a Reconfigurable Intelligent Surface (RIS). Specifically, the control unit 330 controls the phase of a radio signal in order to relay the radio signal toward the terminal 20 or the base station 10A based on estimated propagation path information H_{PT} and H_{RP}. In other words, based on the same principle as beamforming, radio waves can be relayed in a specific direction by changing phases of an array antenna or the like. The wireless relay apparatus 30 may relay the signal without power supply by controlling (changing) only the phase of the radio signal (radio wave) by the control unit 330, without amplifying the power of the relayed radio signal.

In the embodiment of the present invention, the control unit 330 may acquire information based on a reception state. The reception unit 320 may also acquire control information from the base station 10A or the terminal 20. For example, the reception unit 320 may receive various signals such as an SSB transmitted from the base station 10A or the terminal 20 (including the various signals exemplified in the above-described functions) as control information.

Further, the control unit 330 may estimate propagation path information (H_{PT} and H_{RP}) between a radio-wave source (e.g., the base station 10A or the terminal 20) and the antenna unit 350 based on the reception state (e.g., a change in reception power) when controlling the variable unit 340.

Propagation path information (propagation channel information) relating to each propagation path specifically includes information such as amplitude or phase, and in the embodiment of the present invention, refers to information estimated with respect to the propagation path of radio waves arriving at the antenna unit 350. As an example, the control unit 330 may estimate propagation path information of the antenna unit 350 based on a change in reception power when the phase of the variable unit 340 of the array-shaped antenna unit 350 is switched orthogonally, based on the same principle as In-phase and Quadrature (I/Q) detection.

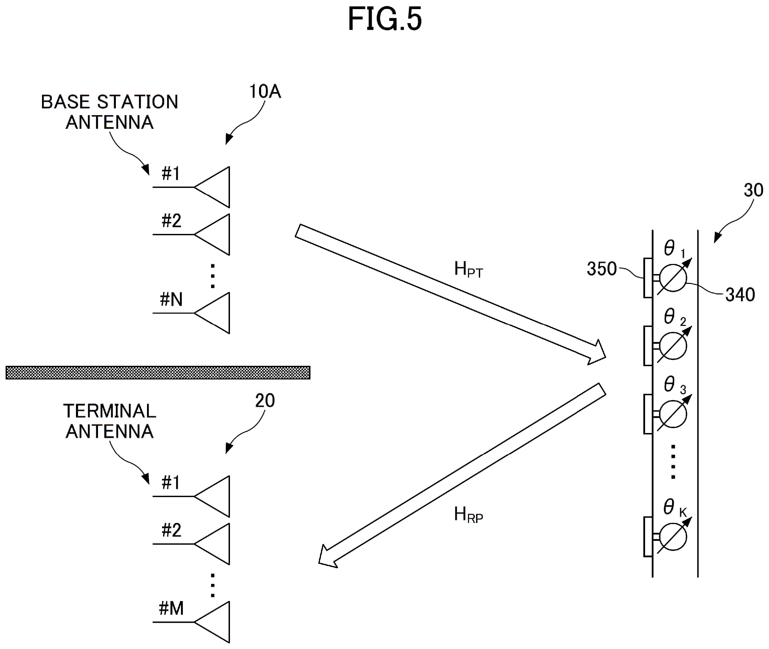

FIG. 5 is a diagram illustrating an example of an operation of the wireless relay apparatus 30 according to the embodiment of the present invention. As illustrated in FIG. 5, for example, the wireless relay apparatus 30 is located between the base station 10A (which may be another base station such as the base station 10) and the terminal 20, and relays (e.g., reflection, transmission, collection, diffraction, etc.) radio signals transmitted and received between the base station 10A and the terminal 20.

As a specific example, when radio quality between the base station 10A and the terminal 20 is favorable, the base station 10A and the terminal 20 directly transmit and receive radio signals without passing through the wireless relay apparatus 30. On the other hand, when radio quality deteriorates, for example due to the presence of an obstacle between the base station 10A and the terminal 20, the wireless relay apparatus 30 relays radio signals transmitted and received between the base station 10A and the terminal 20.

Specifically, the wireless relay apparatus 30 estimates propagation path information H_{PT} and H_{RT} between a radio-wave source such as the base station 10A or the terminal 20 and the relay antenna based on a change in reception power when controlling the variable unit 340 such as a variable phase shifter. Based on the estimated propagation path information, the wireless relay apparatus 30 controls the variable unit 340 such as the variable phase shifter to relay radio signals toward a radio-wave receiving destination such as the terminal 20. The wireless relay apparatus 30 is not limited to estimating propagation path information H_{PT} and H_{RT}, and may relay radio signals toward a radio-wave receiving destination such as the base station 10A or the terminal 20 by controlling the variable unit 340 such as a variable phase shifter based on control information received from the base station 10A or the terminal 20.

Here, a propagation path or propagation channel refers to each individual communication path in wireless communication, and in this case refers to a communication path between each transmitting and receiving antenna (e.g., the base station antenna and the terminal antenna shown in the figure).

As an example, the wireless relay apparatus 30 includes an antenna unit 350 having a compact multi-element antenna corresponding to Massive MIMO, and a variable unit 340 having a variable phase shifter or phase shifter that changes the phase of a radio signal, essentially a radio wave, to a specific phase. The variable unit 340 is used to control the phase of radio waves relayed to the terminal 20 or the base station 10A.

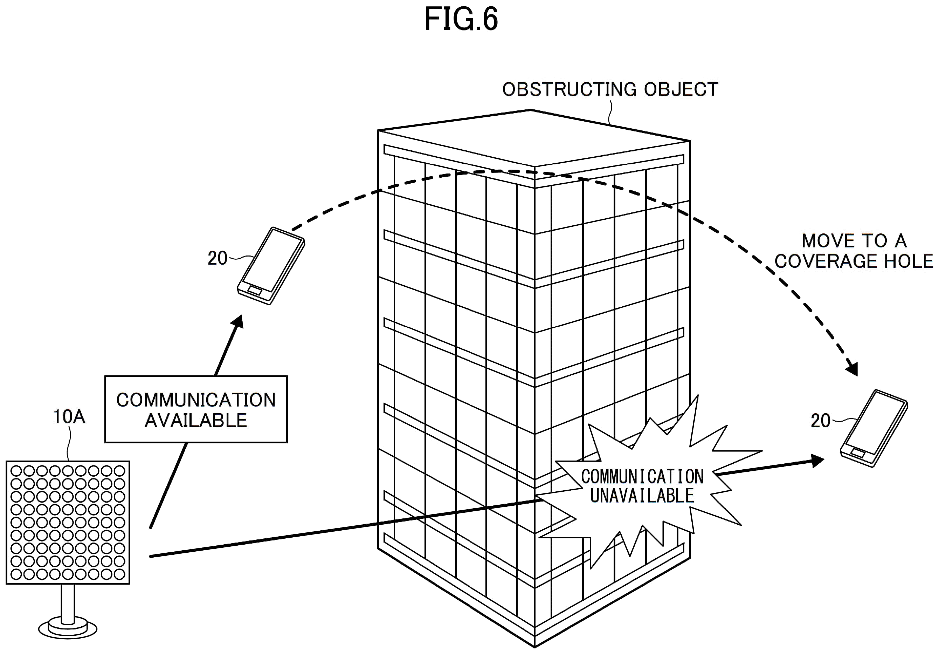

FIG. 6 is a diagram illustrating an example of communication in a high-frequency band. As illustrated in FIG. 6, when a high-frequency band of several GHz to several tens of GHz or higher is used, dead zones are likely to occur due to the strong straight-line propagation characteristics of radio waves. When the base station 10A and the terminal 20 have a line-of-sight path between them, radio communication between the base station 10A and the terminal 20 is not affected even when the high-frequency band is used. On the other hand, when the line-of-sight between the base station 10A and the terminal 20 is blocked by an obstacle such as a building or a tree, radio quality significantly deteriorates. That is, when the terminal 20 moves into a dead zone where it is shielded by an obstacle, communication may be interrupted.

Considering the existence of applications (such as remote operation) that take advantage of high speed, large capacity, and low latency characteristics, it is important to eliminate dead zones and ensure that the base station and the terminal maintain a connection without interruption of communication within the wireless communication system.

Accordingly, technologies capable of relaying radio waves between the base station 10A and the terminal 20 have been developed, such as radio propagation control apparatuses including a Reconfigurable Intelligent Surface (RIS) or a smart repeater. By controlling propagation characteristics of base station signals in this manner, communication characteristics can be improved, coverage can be expanded without requiring a signal source, and installation and operation costs associated with adding base stations can be reduced.

Conventional radio propagation control apparatuses include passive types and active types. Although the passive type has the advantage that control information is unnecessary, it cannot follow a moving object or environmental changes. On the other hand, although the active type has the disadvantage that control information is required and overhead increases, the propagation characteristics of radio waves can be variably controlled by changing a load (phase) state of a control antenna, and thus the active type can follow a moving object and environmental changes.

There are two types of active radio propagation control apparatuses and control methods: a feedback (FB)-based method and a propagation path information-based method. In the FB-based method, a variable radio propagation control apparatus randomly changes a load (phase) state, and the resulting communication state is fed back from the terminal 20 or the like in order to search for optimal conditions. In the propagation path information-based method, a load state is determined based on propagation path information between the base station and the radio propagation control apparatus, thereby enabling optimal radio propagation control. In the embodiment of the present invention, either type can be applied.

Further, relay methods include types such as reflection, transmission, diffraction, and collection. In the present embodiment, as an example, configuration examples of a reflective-type and a transmissive-type will be described below (for diffractive-types and collective-types, see Non-Patent Document 2 and the like).

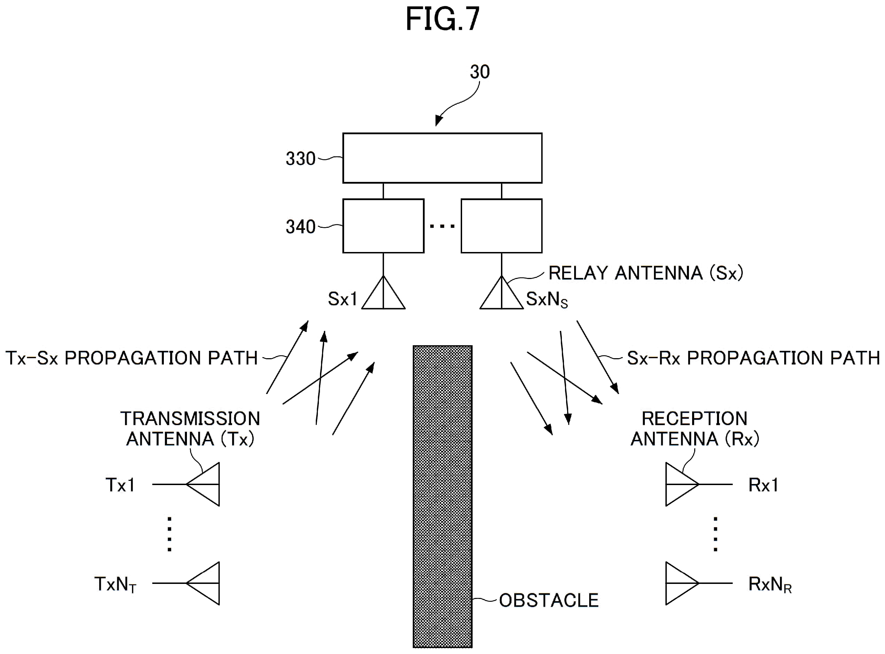

FIG. 7 is a diagram illustrating an example of the reflection-type wireless relay apparatus 30 according to the embodiment of the present invention. An example of a system configuration of the reflection-type wireless relay apparatus 30 will be described with reference to FIG. 7. FIG. 7 illustrates a relationship among a transmission antenna Tx of the base station 10A or the like, a relay antenna Sx of the wireless relay apparatus 30, and a reception antenna Rx of the terminal 20 or the like. As illustrated in FIG. 7, in the embodiment of the present invention, Multiple-Input Multiple-Output (MIMO) is used as an example. A plurality of propagation paths exist between Tx and Sx and between Sx and Rx, and the wireless relay apparatus 30 relays radio waves by controlling the variable unit 340 including a variable phase shifter or the like of the relay antenna Sx.

As illustrated in FIG. 7, in the reflective-type, arrayed relay antennas are arranged so as to face the same direction. Accordingly, propagation paths of the relay antennas can be estimated based on reception states observed when a plurality of phase conditions of the relay antennas are changed.

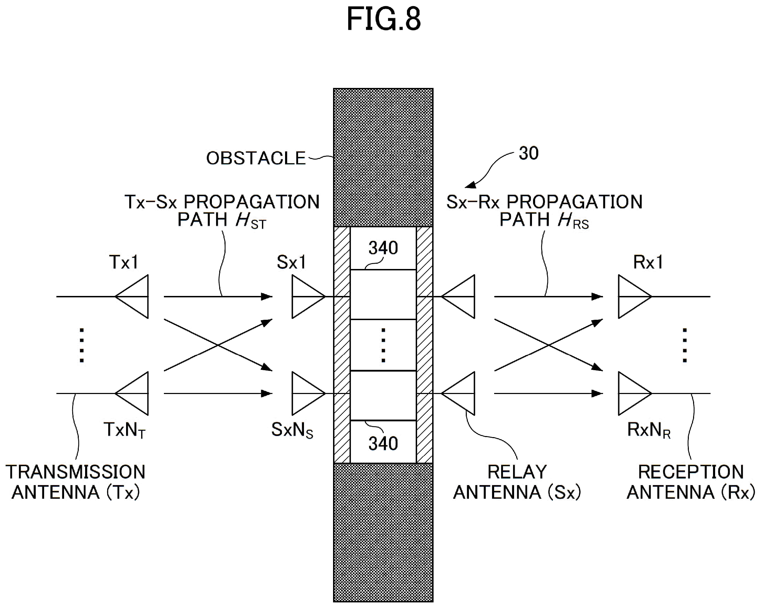

FIG. 8 is a diagram illustrating an example of a transmission-type wireless relay apparatus 30 according to the embodiment of the present invention. An example of a system configuration of the transmission-type wireless relay apparatus 30 will be described with reference to FIG. 8. FIG. 8 illustrates a relationship among a transmission antenna Tx of the base station 10A or the like, a relay antenna Sx of the transmission-type wireless relay apparatus 30, and a reception antenna Rx of the terminal 20 or the like. As illustrated in FIG. 8, in the embodiment of the present invention, Multiple-Input Multiple-Output (MIMO) is used as an example. A plurality of propagation paths exist between Tx and Sx and between Sx and Rx, and the wireless relay apparatus 30 relays radio waves arriving from one side to the other side via the variable unit 340 such as a variable phase shifter of the relay antenna Sx, as illustrated. In the transmissive-type, a reference antenna on the left side of the figure and a relay antenna on the right side of the figure are arranged in pairs facing opposite directions so that radio waves arriving from one side can be relayed to the other side. In either the transmissive-type or the reflective-type, a power detector or the like may be provided so that power arriving at the relay antenna can be detected, thereby measuring the reception state. In addition, propagation paths of the relay antennas can be estimated based on reception signals observed when a plurality of phase conditions of the relay antennas are changed.

In future networks such as 6G, even higher performance will be required compared with 5G. For example, ultra-high speeds on the order of terabits per second and highly reliable low latency comparable to optical communication will be required. In addition, designs considering ultra coverage expansion, ultralong-distance communication, ultra-reliable communication, virtual cells, flexible networks, mesh networks, enhanced sidelink, and the use of RIS or smart repeaters will be required.

To achieve such performance, the use of extremely high frequencies, for example terahertz waves, is envisioned. For example, when very high frequencies such as terahertz waves are used, advantages such as increased data rates due to ultra-wide bandwidth utilization and reduced latency due to short symbol lengths are expected. On the other hand, disadvantages such as narrow coverage due to large attenuation and reduced reliability due to strong straight-line propagation characteristics are also expected. It is therefore required to consider how to ensure redundancy for each location where 6G communication is required, that is, how to increase transmission points for communication.

As described above, a Reconfigurable Intelligent Surface (RIS) reflects or transmits a beam transmitted from the base station 10 or the terminal 20 in a predetermined direction and delivers the beam to the terminal 20 or the base station 10. A passive RIS is a apparatus that does not change control such as a reflection angle or beam width according to a position of a mobile station. While control information is unnecessary, precise beam control is difficult. An active RIS is a apparatus that changes control such as the reflection angle and beam width according to the position of the mobile station. Although precise beam control is possible, overhead increases because control information is required. By using RIS, transmission points for communication can be increased.

Note that RIS may also be referred to by the following names 1)-4), and is not limited thereto:
1) Battery-less device
2) Metamaterial functional apparatus
3) Intelligent reflecting surface
4) Smart repeater

RIS may be any apparatus having a predetermined function, and the predetermined function may include at least one of the functions 1) and 2) described below.

### 1) UE function

A function of receiving a signal transmitted from the base station 10 (e.g., a DL signal, SSB, PDCCH, PDSCH, DM-RS, PT-RS, CSI-RS, or an RIS-specific signal). Information relating to the metamaterial function described in 2) below may be received by the reception function.
A function of transmitting a signal to the base station 10 (e.g., a UL signal, PRACH, PUCCH, PUSCH, DM-RS, PT-RS, SRS, or an RIS-specific signal). Information relating to the metamaterial function described in 2) below may be transmitted by the transmission function. A frame synchronization function with the base station 10.

### 2) Metamaterial function

A function of reflecting a signal transmitted from the base station 10 or the terminal 20 (e.g., phase change). The signal may be reflected by changing phases for each of a plurality of reflecting elements included in RIS, or by applying a common phase change to a plurality of reflecting elements.
A function relating to beam control (e.g., a function relating to control of a TCI-state or QCL, beam selection and application, and selection and application of spatial filters/precoding weights). A function of changing power of a signal transmitted from the base station 10 or the terminal 20 (e.g., power amplification). Different power changes may be applied to respective reflecting elements included in RIS, or a common power change may be applied to a plurality of reflecting elements.

In RIS, "receiving and transmitting" may mean reflecting a radio wave/signal. Hereinafter, the terms "base station" and "terminal" are used, but these are not limiting and may be replaced with communication apparatuses. RIS may also be replaced with a smart repeater, a relay apparatus, or the like.

For example, RIS may operate under the following assumptions 1)-6):
1) A network operator configures the RIS.
2) The RIS is fixed and does not move.
3) The RIS relays signals from only one base station.
4) Reception and transmission of control signals are possible.
5) Operation is performed in half-duplex.
6) A single RIS environment is assumed.

As described above, the use of RIS, smart repeaters, and the like is considered for the purpose of flexible and low-cost expansion of a communication area of a wireless communication network. A major difference between RIS or a smart repeater and an Integrated Access and Backhaul node is that the IAB node performs baseband signal processing, whereas RIS or a smart repeater does not perform baseband processing. In order to control a transmission direction or transmission beam of RIS or a smart repeater, a connection may be established between the base station 10 and RIS or the smart repeater, and configuration information may be predefined.

For example, the terminal 20 may operate as follows when using signals via a plurality of RISs or wireless relay apparatuses 30 such as smart repeaters. In the following description, RIS may be replaced with a smart repeater.

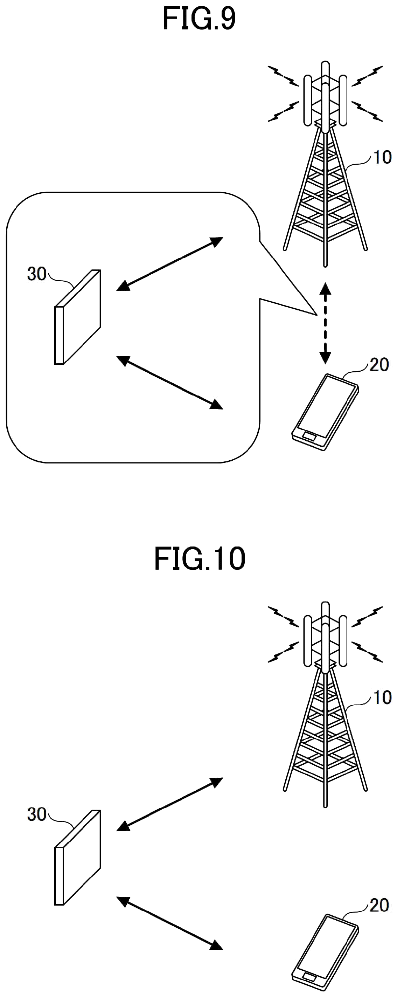

FIG. 9 is a diagram illustrating an example of communication (1) according to an embodiment of the present invention. As illustrated in FIG. 9, the presence of the RIS 30 is transparent, and a case 1 is assumed in which the base station 10 and the terminal 20 do not recognize that communication is performed via the RIS 30.

FIG. 10 is a diagram illustrating an example of communication (2) according to an embodiment of the present invention. As illustrated in FIG. 10, the presence of the RIS 30 is non-transparent, and a case 2 is assumed in which the base station 10 and the terminal 20 recognize that communication is performed via the RIS 30.

Here, in order to improve the performance of a radio access network toward 5G Evolution and 6G, a new network topology (New Radio Network Topology, NRNT) has been studied. In this topology, the conventional cell-based designed radio access network configuration is further expanded into a heterogeneous network in which multiple cell areas overlap and terminals cooperate with surrounding relay nodes, thereby increasing connection paths of the wireless network.

By NR-NTN, it is expected to expand coverage, increase options for path selection, expand a line-of-sight area, avoid blockage, and increase the number of MIMO spatial multiplexing layers. Among element technologies of NR-NTN, there are metasurfaces or RIS obtained by further enhancing the above-described reflector technology. A metasurface is a type of artificial medium (metamaterial) that realizes arbitrary permittivity and permeability by periodically arranging structures smaller than a wavelength. As described above, an RIS is a apparatus in which in-plane scattering characteristics are variable, and a reflection direction or a transmission direction can be dynamically controlled.

In realizing NRNT, improvement of the radio environment of a cellular network may be considered. A metasurface, RIS, or relay apparatus may be installed on mobility or stationary objects, and the reception quality of a terminal may be improved by controlling directions of radio-wave propagation. Here, mobility may be a moving object such as a vehicle.

On the other hand, in environments with few reflected waves, for example rural areas or highways, it is difficult to improve capacity by increasing the number of MIMO spatial multiplexing streams. Further, in communication with mobility, particularly high-speed moving objects, a Doppler shift occurs and communication quality deteriorates. The Doppler shift refers to a phenomenon in which, when a wave source such as a sound wave or an electromagnetic wave moves or an observer of the wave moves, the frequency of the wave is observed as a value different from the actual value when a relative velocity exists between the wave source and the observer.

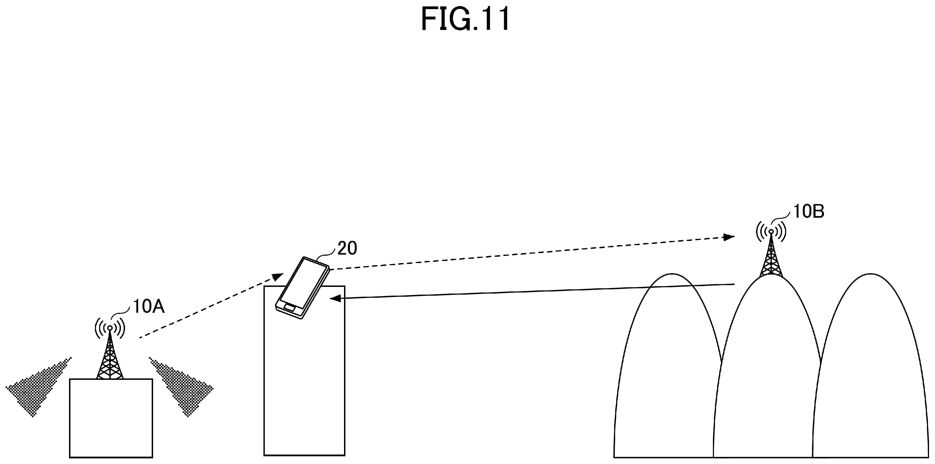

FIG. 11 is a diagram illustrating an example of a communication environment according to the embodiment of the present invention. As indicated by dashed lines in FIG. 11, since radio waves from the base station 10A are basically radiated downward, the radio waves from the base station hardly reach upper floors of buildings. Further, although radio waves from a distant high position are likely to reach due to good line-of-sight, the radio waves from the terminal 20 hardly reach the base station 10B because the distance from the base station 10B is large, as illustrated by the dashed lines in FIG. 11.

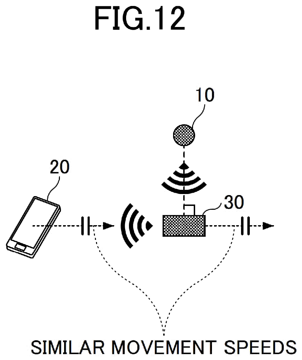

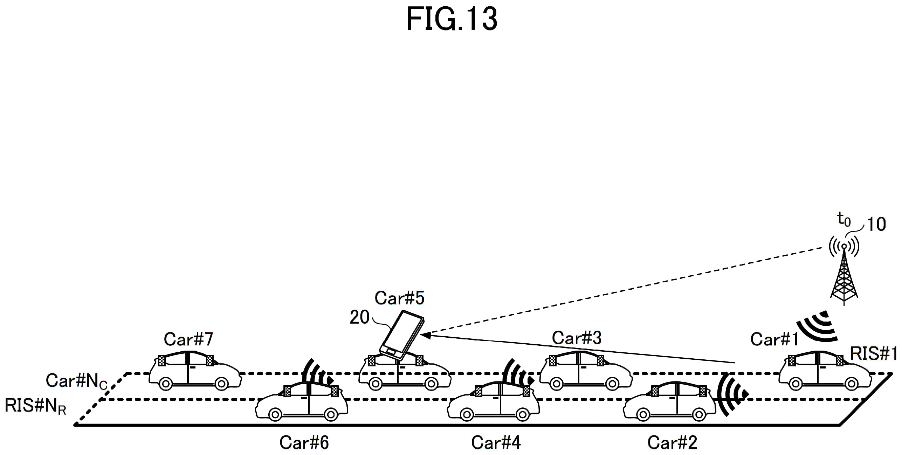

FIG. 12 is a diagram illustrating an example (1) in which an RIS is installed on mobility according to the embodiment of the present invention. FIG. 13 is a diagram illustrating an example (2) in which an RIS is installed on mobility according to the embodiment of the present invention. As illustrated in FIGS. 12 and 13, an RIS may be installed on mobility to increase reflection paths. As illustrated in FIG. 12, in order to minimize a Doppler shift, the base station 10 may radiate radio waves perpendicular to a moving direction toward an RIS 30 that moves in the same direction and at approximately the same speed as the terminal 20, and the RIS 30 may reflect or transmit the radio waves and radiate them toward the target terminal 20.

FIG. 13 illustrates an example of operation on a highway and shows an example in which radio waves are radiated from Car #1 equipped with RIS #1 toward Car #5 equipped with a target terminal. For example, the operations described in 1)-6) below may be executed.

1) The terminal and RIS may periodically notify the base station of position information of the terminal and RIS, or the vehicle, or the base station may estimate the position information.
2) The base station estimates a movement speed of the vehicle, that is, a movement speed of the terminal or RIS, from the position information. The base station may also estimate a moving direction of the vehicle from the position information.
3) When radio waves are transmitted from the base station (t₀), it is assumed that no direct path to the target terminal exists.
4) The base station selects an RIS for which a sum of a relative speed between the base station and the RIS and a relative speed between the RIS and the target terminal is minimized. The relative speed may be calculated from a movement speed and a moving direction of the vehicle.
5) The base station may select a plurality of RISs. For example, a plurality of RISs may be selected in ascending order of the sum of the relative speed between the base station and the RIS and the relative speed between the RIS and the target terminal.
6) The selected RIS reflects and/or transmits the radio waves transmitted from the base station toward the target terminal. The base station may instruct the RIS to perform this operation.

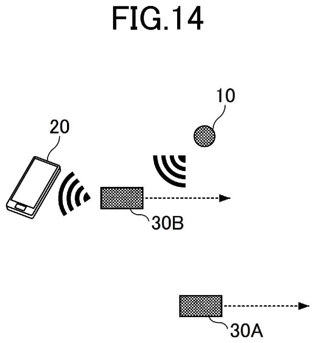

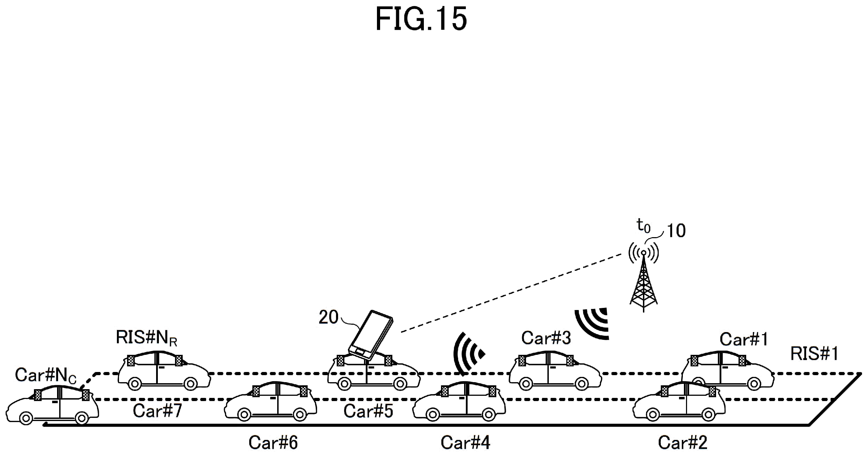

FIG. 14 is a diagram illustrating an example (3) in which an RIS is installed on mobility according to the embodiment of the present invention. FIG. 15 is a diagram illustrating an example (4) in which an RIS is installed on mobility according to the embodiment of the present invention. As illustrated in FIGS. 14 and 15, an RIS may be installed on mobility in order to increase reflection paths. As illustrated in FIG. 14, in order to minimize power loss and delay, the RIS 30B closest to the base station 10 may reflect or transmit the radio waves and radiate them toward the target terminal 20.

FIG. 14 illustrates an example of operation on a highway and shows an example in which radio waves are radiated from Car #3 equipped with an RIS toward Car #5 equipped with a target terminal. For example, the operations described in 1)-4) below may be executed.

1) The terminal and RIS may periodically notify the base station of position information of the terminal and RIS, or the vehicle, or the base station may estimate the position information.
2) When radio waves are transmitted from the base station (t₀), it is assumed that no direct path to the target terminal exists.
3) The base station selects an RIS for which a total distance between the base station and the RIS and between the RIS and the target terminal is minimized, based on the position information. The base station may select a plurality of RISs. For example, a plurality of RISs may be selected in ascending order of the total distance.
4) The selected RIS reflects and/or transmits the radio waves transmitted from the base station toward the target terminal. The base station may instruct the RIS to perform this operation.

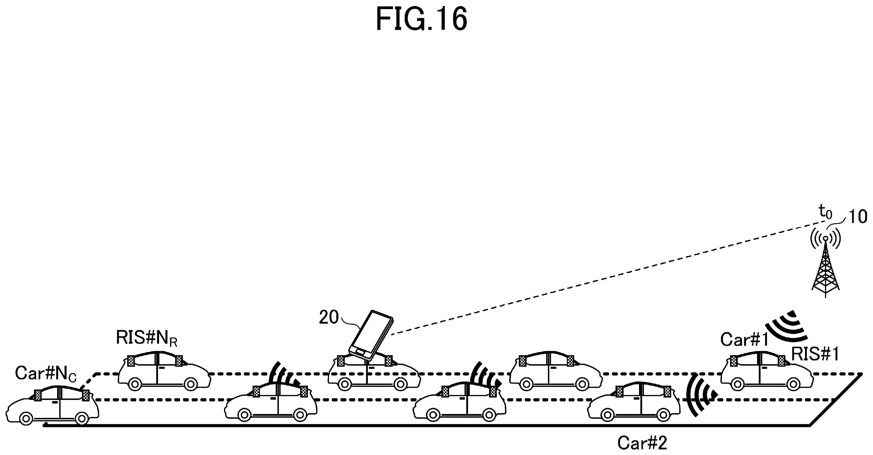

FIG. 16 is a diagram illustrating an example (5) in which an RIS is installed on mobility according to the embodiment of the present invention. As illustrated in FIG. 16, an RIS may be installed on mobility to increase reflection paths. As illustrated in FIG. 16, an RIS may be selected so as to minimize Doppler shift, power loss, and delay, and the radio waves may be reflected or transmitted toward the target terminal 20.

FIG. 16 illustrates an example of operation on a highway. For example, the operations described in 1)-6) below may be executed.

1) The terminal and RIS may periodically notify the base station of position information of the terminal and RIS, or the vehicle, or the base station may estimate the position information.
2) The base station estimates a movement speed of the vehicle, that is, a movement speed of the terminal or RIS, based on the position information. The base station may also estimate a moving direction of the vehicle based on the position information.
3) When radio waves are transmitted from the base station (t₀), it is assumed that no direct path to the target terminal exists.
4) The base station selects an RIS for which a sum of a distance between the base station and the RIS and a distance between the RIS and the target terminal, and a sum of a relative speed between the base station and the RIS and a relative speed between the RIS and the target terminal are minimized based on the position information. Different weights respectively set for the distance sum and the relative speed sum may be multiplied to calculate the total value. The relative speed may be calculated from a movement speed and a moving direction of the vehicle.
5) The base station may select a plurality of RISs. For example, a plurality of RISs may be selected in ascending order of the calculated total value.
6) The selected RIS reflects and/or transmits the radio waves transmitted from the base station toward the target terminal. The base station may instruct the RIS to perform this operation.

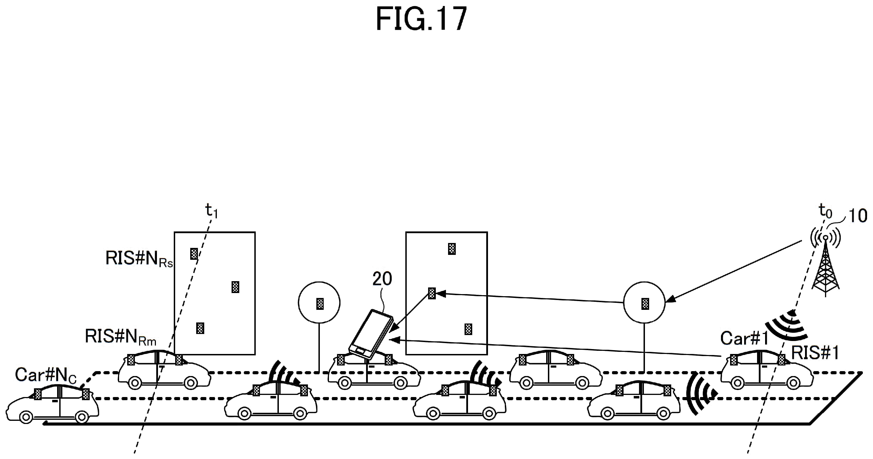

FIG. 17 is a diagram illustrating an example (6) in which an RIS is installed on mobility according to the embodiment of the present invention. As illustrated in FIG. 17, RISs may be installed on mobility and stationary objects such as road signs or buildings in order to increase reflection paths. As illustrated in FIG. 17, an RIS may be selected so as to minimize Doppler shift by radiating radio waves more perpendicularly with respect to a moving direction, and the radio waves may be reflected or transmitted toward the target terminal 20.

FIG. 17 illustrates an example of operation on a highway. For example, the operations described in 1)-6) below may be executed.

1) The terminal and RIS may periodically notify the base station of position information of the terminal and RIS, or the vehicle, or the base station may estimate the position information.
2) The base station estimates a movement speed of the vehicle, that is, a movement speed of the terminal or RIS, based on the position information. The base station may also estimate a moving direction of the vehicle based on the position information.
3) When radio waves are transmitted from the base station (t₀), it is assumed that no direct path to the target terminal exists.
4) The base station selects an RIS for which a sum of a relative speed between the base station and the RIS and a relative speed between the RIS and the target terminal is minimized. The relative speed may be calculated from a movement speed and a moving direction of the vehicle.
5) The base station may select a plurality of RISs. For example, a plurality of RISs may be selected in ascending order of the sum of the relative speeds.
6) The selected RIS reflects and/or transmits the radio waves transmitted from the base station toward the target terminal. The base station may instruct the RIS to perform this operation.

Further, as illustrated in FIG. 17, in order to minimize power loss and delay, an RIS installed on mobility and stationary objects such as road signs or buildings may be selected such that a path to the target terminal is minimized.

1) The terminal and RIS may periodically notify the base station of position information of the terminal and RIS, or the vehicle, or the base station may estimate the position information.
2) When radio waves are transmitted from the base station (t₀), it is assumed that no direct path to the target terminal exists.
3) The base station selects an RIS for which a total distance between the base station and the RIS and between the RIS and the target terminal is minimized based on the position information. The base station may select a plurality of RISs. For example, a plurality of RISs may be selected in ascending order of the total distance.
4) The selected RIS reflects and/or transmits the radio waves transmitted from the base station toward the target terminal. The base station may instruct the RIS to perform this operation.

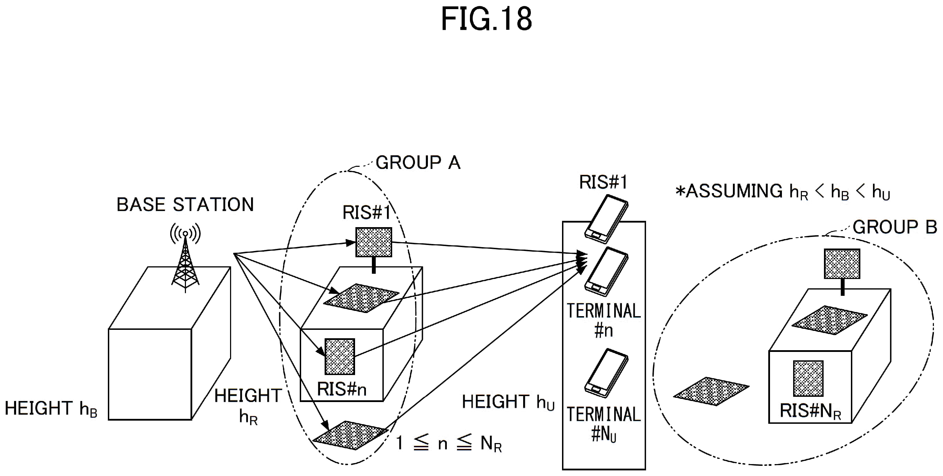

FIG. 18 is a diagram illustrating an example (1) in which an RIS is installed on a stationary object according to the embodiment of the present invention. As illustrated in FIG. 18, radio waves from the base station may be reflected toward an upper floor of a building by a metasurface or an RIS. The metasurface or RIS may be replaced with another relay apparatus. For example, candidate installation positions for the metasurface or RIS may include a side wall of a building, window glass, a rooftop floor surface, a signboard, digital signage, or the ground. For example, as illustrated in FIG. 18, a height h_{B} of the base station, a height h_{R} of the RIS, and a height h_{U} of the terminal may satisfy a relationship of h_{R} < h_{B} < h_{U}. In other words, the installation may be such that the terminal is located at the highest position and the RIS is located at the lowest position.

The installation position of the metasurface or RIS may be determined as follows.

1) An optimization function relating to user requirements is created based on position information (of the base station and the terminal) and an incidence angle and/or a reflection angle of the metasurface or RIS at candidate installation positions of the metasurface or RIS.
2) The optimization function is solved with constraints such as whether installation of the metasurface or RIS is possible and threshold values of the user requirements, and the installation position is determined.

The user requirements may include, for example, data rate, latency, quality, cost, power consumption, and perceived performance.

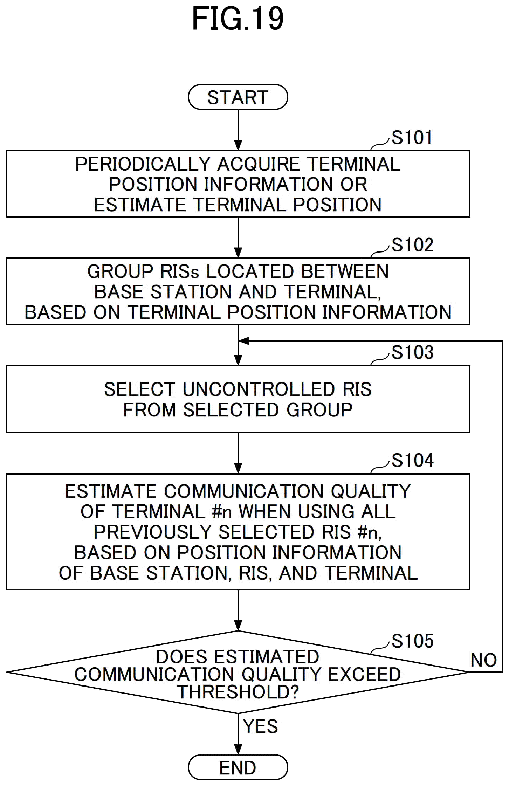

FIG. 19 is a flowchart for explaining an example of controlling an RIS according to the embodiment of the present invention. FIG. 19 shows a method for determining an RIS to be controlled when an RIS capable of dynamically controlling a reflection direction is used in FIG. 18.

In step S101, the base station periodically acquires terminal position information or estimates the terminal position. In step S102, the base station groups RISs located between the base station and the terminal based on the terminal position information. The position information of the base station and the RISs may be known in advance. In FIG. 18, the RISs are grouped into Group A and Group B, and an example in which Group A is selected is illustrated.

In step S103, the base station selects an uncontrolled RIS from the selected group. Based on an effective area of the RIS calculated from the position information of the base station, RIS, and UE, an incidence angle and/or reflection angle of the RIS, distance attenuation, and the like, the received power in a desired area may be estimated from the transmission power of the base station, and the RIS that maximizes the received power of the terminal may be selected.

In step S104, the base station estimates the communication quality of the terminal #n when using all previously selected RISs #n, based on the position information of the base station, RIS, and terminal. In step S105, the base station determines whether the estimated communication quality exceeds a threshold. When the threshold is exceeded (YES in S105), the flow ends. When the threshold is not exceeded (NO in S105), the process proceeds to step S103, and the number of selected RISs is increased.

According to the above embodiments, the reception quality of a terminal can be improved by installing the wireless relay apparatus 30 on a moving object or a stationary object and controlling a direction of radio wave propagation.

That is, in a wireless communication system, communication quality can be improved by using a wireless relay apparatus.

### (Hardware Structure)

The block diagrams that have been used to describe the above embodiments (Figs. 2, 3 and 4) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (e.g., via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmission unit or a transmitter. The method for implementing each component is not particularly limited as described above.

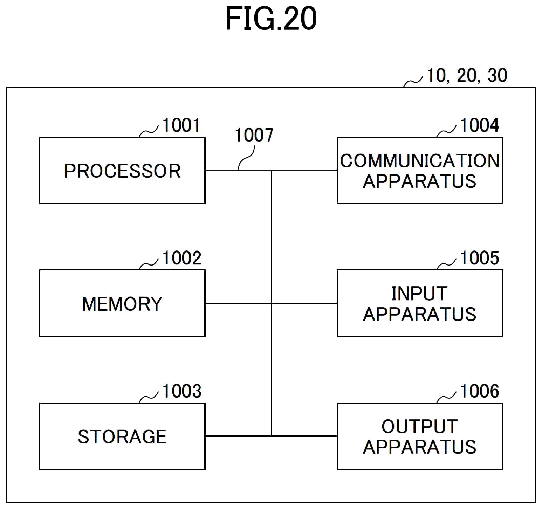

For example, the base station 10, the terminal 20, and the wireless relay apparatus 30 according to an embodiment of the present disclosure may function as a computer for processing the radio communication method of the present disclosure. Fig. 20 is a diagram to show an example of a hardware structure of the base station 10, the terminal 20, and the wireless relay apparatus 30 according to one embodiment. Physically, the above-described base station 10, the terminal 20, and the wireless relay apparatus 30 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a apparatus, a section, a unit, and so on can be interchangeably interpreted. The hardware structure of the base station 10, the terminal 20, and the wireless relay apparatus 30 may be configured to include one or more of apparatuses shown in the drawings, or may be configured not to include part of apparatuses.

Each function of the base station 10, the terminal 20, and the wireless relay apparatus 30 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 2 may be implemented by control programs that are stored in the memory 1002 and that operate on the processor 1001. In addition, for example, the control unit 240 of the terminal 20 illustrated in Fig. 3 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (e.g., a compact disc (Compact Disc ROM (CD-ROM) and so on), a digital versatile disc, a Blu-ray (registered trademark) disk), a removable disk, a hard disk drive, a smart card, a flash memory apparatus (e.g., a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving apparatus) for allowing inter-computer communication via at least one of wired or wireless networks, and may be referred to as, for example, a "network apparatus," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmission unit and a receiving unit.

The input apparatus 1005 is an input apparatus that receives input from the outside (e.g., a keyboard, a mouse, a microphone, a switch, a button, a sensor, and so on). The output apparatus 1006 is an output apparatus that outputs something to the outside (e.g., display, speaker, LED lamp). Note that the input apparatus 1005 and the output apparatus 1006 may be provided in an integrated structure (e.g., a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10, the terminal 20, and the wireless relay apparatus 30 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Further, the wireless relay apparatus 30 may include, as hardware constituting the variable unit 340 and the antenna unit 350, a variable phase shifter, a phase shifter, an amplifier, an antenna, an array antenna, and the like, as necessary.

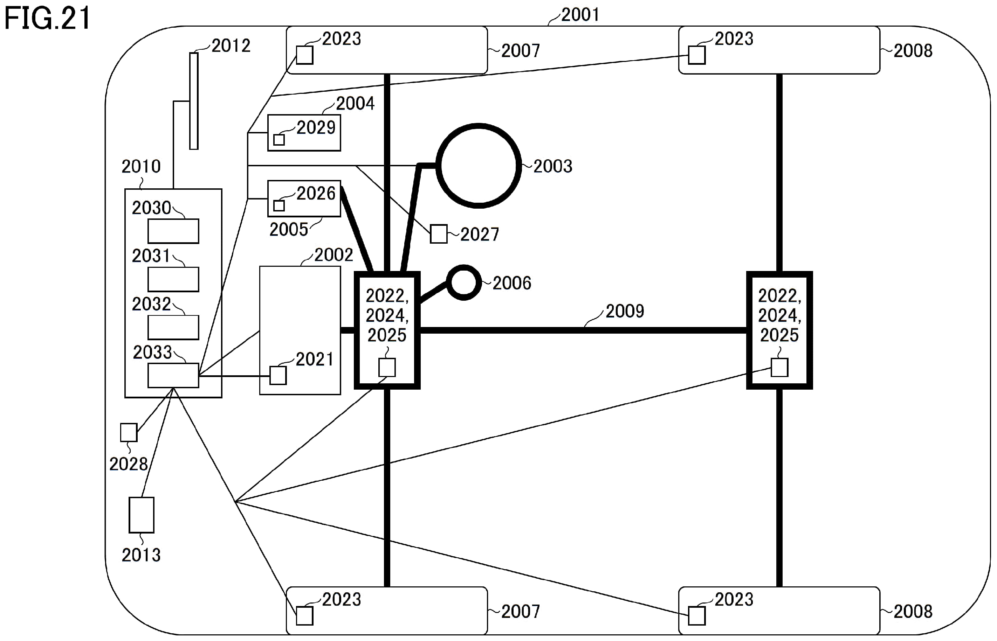

Fig. 21 shows an example of a configuration of a vehicle 2001. As shown in Fig. 21, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. The aspects/embodiments described in the present disclosure may be applied to a communication apparatus mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various apparatuses for providing (outputting) various kinds of information such as driving information, traffic information, and entertainment information, including a car navigation system, an audio system, a speaker, a television, and a radio, and one or more ECUs controlling these apparatuses. The information service unit 2012 provides various types of multimedia information and multimedia services to the occupants of the vehicle 2001 by using information obtained from the external apparatus through the communication module 2013 or the like. The information service unit 2012 may include an input apparatus (e.g., a keyboard, a mouse, a microphone, a switch, a button, a sensor, a touch panel, and the like) for receiving input from the outside, or may include an output apparatus (e.g., a display, a speaker, an LED lamp, a touch panel, and the like) for implementing output to the outside.

A driving support system unit 2030 includes: various apparatuses for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these apparatuses. In addition, the driving support system unit 2030 transmits and receives various types of information via the communication module 2013 to realize a driving support function or an autonomous driving function.

The communication module 2013 can communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021 to 2029 provided in the vehicle 2001.

The communication module 2013 is a communication apparatus that can be controlled by the microprocessor 2031 of the electronic control unit 2010 and that is capable of communicating with external apparatuses. For example, various kinds of information are transmitted to and received from external apparatuses through radio communication. The communication module 2013 may be internal to or external to the electronic control unit 2010. The external apparatuses may include, for example, a base station, a mobile station, or the like.

The communication module 2013 transmits, via wireless communication, a current signal from a current sensor input to the electronic control unit 2010 to an external apparatus. The communication module 2013 also transmits, via wireless communication, to the external apparatus, a revolution signal of front wheels and rear wheels acquired by the revolution sensor 2022, a pneumatic signal of the front wheels and rear wheels acquired by the pneumatic sensor 2023, a vehicle speed signal acquired by the vehicle speed sensor 2024, an acceleration signal acquired by the acceleration sensor 2025, an accelerator pedal depression amount signal acquired by the accelerator pedal sensor 2029, a brake pedal depression amount signal acquired by the brake pedal sensor 2026, a shift lever operation signal acquired by the shift lever sensor 2027, and detection signals for detecting obstacles, vehicles, pedestrians, and the like acquired by the object detection sensor 2028, all of which are input to the electronic control unit 2010.

The communication module 2013 receives various types of information (traffic information, signal information, inter-vehicle information, etc.) transmitted from the external apparatuses and displays the received information on the information service unit 2012 provided in the vehicle 2001. In addition, the communication module 2013 stores the various types of information received from the external apparatuses in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Summary of Embodiment)

As described above, according to an embodiment of the present invention, there is provided a base station comprising: an acquisition unit configured to acquire position information of a terminal and position information of a plurality of wireless relay apparatuses, respectively; a control unit configured to select, based on the position information, a wireless relay apparatus to be controlled from among the plurality of wireless relay apparatuses; and a transmission unit configured to transmit a radio wave to the selected wireless relay apparatus.

With the above configuration, by installing wireless relay apparatuses 30 on moving objects or stationary objects and controlling a direction of radio wave propagation, it is possible to improve reception quality of a terminal. That is, in a wireless communication system, communication quality can be improved by using wireless relay apparatuses.

The control unit may be configured to estimate, based on the position information, a first relative speed between the base station and a first wireless relay apparatus included in the plurality of wireless relay apparatuses and a second relative speed between the first wireless relay apparatus and the terminal, and to select, from among the plurality of wireless relay apparatuses, the wireless relay apparatus to be controlled such that a sum of the first relative speed and the second relative speed is minimized. With this configuration, by installing wireless relay apparatuses 30 on moving objects or stationary objects and controlling a direction of radio wave propagation, it is possible to improve reception quality of a terminal.

The control unit may be configured to estimate, based on the position information, a first distance between the base station and the first wireless relay apparatus and a second distance between the first wireless relay apparatus and the terminal, and to select, from among the plurality of wireless relay apparatuses, the wireless relay apparatus to be controlled such that a sum of the first distance and the second distance is minimized. With this configuration, by installing wireless relay apparatuses 30 on moving objects or stationary objects and controlling a direction of radio wave propagation, it is possible to improve reception quality of a terminal.

The plurality of wireless relay apparatuses may be respectively installed on a plurality of different moving objects. With this configuration, by installing wireless relay apparatuses 30 on moving objects or stationary objects and controlling a direction of radio wave propagation, it is possible to improve reception quality of a terminal.

The control unit may be configured to group the plurality of wireless relay apparatuses based on the position information of the terminal and select one of the groups, and to increase a number of wireless relay apparatuses to be controlled within the selected group until an estimated communication quality at the terminal exceeds a threshold. With this configuration, by installing wireless relay apparatuses 30 on moving objects or stationary objects and controlling a direction of radio wave propagation, it is possible to improve reception quality of a terminal.

Further, according to an embodiment of the present invention, there is provided a communication method executed by a base station, the communication method comprising: acquiring position information of a terminal and position information of a plurality of wireless relay apparatuses, respectively; selecting, based on the position information, a wireless relay apparatus to be controlled from among the plurality of wireless relay apparatuses; and transmitting a radio wave to the selected wireless relay apparatus.

With the above configuration, by installing wireless relay apparatuses 30 on moving objects or stationary objects and controlling a direction of radio wave propagation, it is possible to improve reception quality of a terminal. That is, in a wireless communication system, communication quality can be improved by using wireless relay apparatuses.

### (Supplement of Embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10, the terminal 20, and the wireless relay apparatus 30 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Also, RRC signaling may be referred to as an "RRC message," and can be, for example, an RRC connection setup message, an RRC connection reconfiguration message, and so on.

The various aspects/embodiments described in the present disclosure may be applied to at least one of systems utilizing LTE (Long Term Evolution), LTE-Advanced (LTE-A), SUPER 3G, IMT-Advanced, 4G (4th generation mobile communication system), 5G (5th generation mobile communication system), 6G (6th generation mobile communication system), an xth generation mobile communication system (xG) (where x is, for example, an integer or a decimal), Future Radio Access (FRA), NR (New Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and to next-generation systems extended, modified, created, or defined based on these systems. A plurality of systems may be combined (e.g., a combination of LTE or LTE-A and 5G, and the like) for application.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (e.g., Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (e.g., three) cells. When a base station accommodates a plurality of cells, the entire coverage area of the base station can be partitioned into multiple smaller areas, and each smaller area can provide communication services through base station subsystems (e.g., indoor small base stations (Remote Radio Heads (RRHs))). The term "cell" or "sector" refers to part of or the entire coverage area of at least one of a base station or a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile apparatus," "wireless apparatus," "wireless communication apparatus," "remote apparatus," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a apparatus mounted on a moving object or a moving object itself, and so on. The moving object may be a vehicle (e.g., a car, an airplane, and the like), may be a moving object which moves unmanned (e.g., a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) apparatus such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (e.g., which may be referred to as "Apparatus-to-Apparatus (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (e.g., "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompass a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "apparatuses", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (e.g., 1 ms) independent of numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in existing LTE, may be a period shorter than 1 ms (e.g., 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for terminals 20, scheduling of allocating radio resources (such as a frequency bandwidth and transmit power available for each terminal 20) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (e.g., the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (e.g., a normal TTI, a subframe, or the like) may be interpreted as a TTI having a time length exceeding 1 ms, and a short TTI (e.g., a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). For the terminal 20, one or more BWPs may be configured in one carrier.

At least one of the configured BWPs may be activated, and the terminal 20 may assume that the UE will not transmit and receive signals/channels outside the activated BWP. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

In the present disclosure, the variable unit 340 and the antenna unit 350 are examples of a relay unit.

Although the present disclosure has been described in detail above, it will be apparent to those skilled in the art that the present disclosure is not limited to the embodiments described herein. The present disclosure can be implemented with modifications and variations without departing from the spirit and scope of the present disclosure as defined by the claims. Accordingly, the description of the present disclosure is intended for illustrative purposes and does not have any limiting meaning with respect to the present disclosure.

### DESCRIPTION OF THE REFERENCE NUMERALS

- 10: Base station
- 110: Transmission unit
- 120: Reception unit
- 130: Configuration unit
- 140: Control unit
- 20: Terminal
- 210: Transmission unit
- 220: Reception unit
- 230: Configuration unit
- 240: Control unit
- 30: Wireless relay apparatus
- 310: Transmission unit
- 320: Reception unit
- 330: Control unit
- 340: Variable unit
- 350: Antenna unit
- 1001: Processor
- 1002: Memory
- 1003: Storage apparatus
- 1004: Communication apparatus
- 1005: Input apparatus
- 1006: Output apparatus
- 2001: Vehicle
- 2002: Drive unit
- 2003: Steering unit
- 2004: Accelerator pedal
- 2005: Brake pedal
- 2006: Shift lever
- 2007: Front wheels
- 2008: Rear wheels
- 2009: Axle
- 2010: Electronic control unit
- 2012: Information service unit
- 2013: Communication module
- 2021: Current sensor
- 2022: Revolution sensor
- 2023: Pneumatic sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving support system unit
- 2031: Microprocessor
- 2032: Memory (ROM, RAM)
- 2033: Communication port (I/O port)

## Claims

1. A base station comprising:
an acquisition unit configured to acquire position information of a terminal and position information of a plurality of wireless relay apparatuses, respectively;
a control unit configured to select, based on the position information, a wireless relay apparatus to be controlled from among the plurality of wireless relay apparatuses; and
a transmission unit configured to transmit a radio wave to the selected wireless relay apparatus.

2. The base station according to claim 1,
wherein the control unit is configured to estimate, based on the position information, a first relative speed between the base station and a first wireless relay apparatus included in the plurality of wireless relay apparatuses and a second relative speed between the first wireless relay apparatus and the terminal, and to select, from among the plurality of wireless relay apparatuses, the wireless relay apparatus to be controlled such that a sum of the first relative speed and the second relative speed is minimized.

3. The base station according to claim 1,
wherein the control unit is configured to estimate, based on the position information, a first distance between the base station and the first wireless relay apparatus and a second distance between the first wireless relay apparatus and the terminal, and to select, from among the plurality of wireless relay apparatuses, the wireless relay apparatus to be controlled such that a sum of the first distance and the second distance is minimized.

4. The base station according to claim 1,
wherein the plurality of wireless relay apparatuses are respectively installed on a plurality of different moving objects.

5. The base station according to claim 1,
wherein the control unit is configured to group the plurality of wireless relay apparatuses based on the position information of the terminal and select one of the groups, and to increase a number of wireless relay apparatuses to be controlled within the selected group until an estimated communication quality at the terminal exceeds a threshold.

6. A communication method executed by a base station, the communication method comprising:
acquiring position information of a terminal and position information of a plurality of wireless relay apparatuses, respectively;
selecting, based on the position information, a wireless relay apparatus to be controlled from among the plurality of wireless relay apparatuses; and
transmitting a radio wave to the selected wireless relay apparatus.
